# EUROPÄISCHE PATENTANMELDUNG

(11) **EP 2 493 057 A1**
(43) Veröffentlichungstag der Anmeldung: **29.08.2012**
(21) Anmeldenummer: 11156228.6
(22) Anmeldetag: 28.02.2011
(51) Int. Cl.: H02K 7/00, H02K 5/26

(54) **Dynamoelektrische Maschine mit Metallbalg als Drehmomentstütze**

(71) Anmelder: SIEMENS AKTIENGESELLSCHAFT, 80333 München (DE)
(72) Erfinder: Tschanter, Andreas, 97618 Heustreu (DE); Waider, Sebastian, 36100 Petersberg (DE)

(57) **Zusammenfassung**

Die Erfindung betrifft eine dynamoelektrische Maschine, die in oder an einer Arbeitsmaschine montierbar ist, mit einem Stator, der ein Wicklungssystem aufweist, und einem Rotor, wobei das Wicklungssystem mit dem Rotor elektromagnetisch wechselwirkt und somit eine Rotation des Rotors um eine Achse bewirkt, wobei an der Stirnseite der dynamoelektrischen Maschine ein Metallbalg als Drehmomentstütze vorgesehen ist.

## Beschreibung

Die vorliegende Erfindung betrifft eine dynamoelektrische Maschine, die in oder an einer Arbeitsmaschine montierbar ist, mit einem Stator, der ein Wicklungssystem aufweist, und einem Rotor, der mit dem Wicklungssystem des Stators elektromagnetisch wechselwirkt und somit eine Rotation des Rotors um eine Achse bewirkt.

Bei elektrisch angetriebenen Arbeitsmaschinen muss grundsätzlich eine Überbestimmung der Lagerung vermieden werden um Lagerschäden zu vermeiden. Eine Überbestimmung der Lagerung tritt beispielsweise auf, wenn ein Direktantrieb eine separat gelagerte Arbeitsmaschine ohne wellenseitige Kupplungsverbindung antreibt. Eine Vermeidung einer derartigen überbestimmten Lagerung gelingt durch eine Verwendung von Drehmomentstützen, die das Reaktionsmoment des Stators des Direktantriebs aufnehmen und beispielsweise in den Maschinenstuhl einleiten. Der Stator des Direktantriebs ist meist nur über Rotorlager mit der Arbeitmaschine verbunden. Die Lager nehmen dabei die statischen Kräfte der dynamoelektrischen Maschine auf. Die Drehmomentstütze nimmt lediglich das Gegenmoment auf, um zu verhindern, dass sich der Stator unter dem Einfluss dieses Gegenmomentes mitdreht.

So ist aus der EP 0 381 829 B1 eine Drehmomentstütze für Aufsteckgetriebe bekannt, bei dem eine Getriebewelle mit der Welle einer Maschine durch Aufstecken verbindbar ist. Die dort beschriebene kardanische Drehmomentstütze gewährt eine Drehsteife und spielfreie Aufhängung.

Aus der DE 198 17 930 A1 ist eine Drehmomentstütze zwischen einem Getriebe und einem Gehäuse mit einem drehgelagerten Rotationskörper bekannt, die als plattenförmiger Grundkörper ausgeführt ist.

Bisher wurden einarmige Momentenstützen eingesetzt, die eine geringe Steifigkeit in den drei translatorischen Achsen gewährleisten, aber für Rotationen deutlich steifer ausgelegt sind. An der Befestigung zwischen Momentenstütze und Maschine wird also eine Kraft übertragen, deren Gegenkräfte sich schädigend auf die Motorlagerung auswirken. Vor allem das der Drehmomentstütze nächstliegende Motorlager nimmt den vergleichsweise größeren Teil dieser Belastung auf.

Außerdem besitzt diese Konstruktionweise für einen geregelten dynamischen Betrieb der dynamoelektrischen Maschine u.a. den Nachteile, dass Schwingungsformen, die keine reinen Torsionsschwingungen sind, auf diese Art durch die Gegenkräfte angeregt werden. Im Resonanzfall schwingt somit nicht nur der starre Stator der dynamoelektrischen Maschine über den elastischen Federstab an einer Momentenstütze, sondern es ist auch an beiden Motorlager, der Motorwelle und sogar am Statorgehäuse eine Verdrehung feststellbar.

Daher wirkt die effektiv wirksame Torsionssteifigkeit wie eine Reihenschaltung mehrerer mechanischer Federn, was letztlich insgesamt eine immer geringer werdende Steifigkeit bewirkt.

Eine weitere Möglichkeit zur Vermeidung von Überbestimmungen der Lagerung stellt eine wellenseitige Kupplung dar. Spielfreie Wellenkupplungen verhindern dies durch flexible Elemente. Da bauartbedingt Wellenkupplungen mit möglichst geringem Durchmesser ausgeführt werden, ist die Momentendichte dementsprechend hoch. Damit müssen diese flexiblen Elemente massiv ausgeführt werden, um diese Kräfte übertragen zu können. Somit bewirkt ein vergleichsweise geringer Achsversatz bzw. Winkelfehlern von Welle-Motor zu Welle-Arbeitsmaschine eine vergleichsweise hohe Rückstellkraft auf die Motorlager.

Der Erfindung liegt deshalb die Aufgabe zugrunde, eine Anbindung einer dynamoelektrischen Maschine in bzw. an eine Arbeitsmaschine so zu gestalten, dass eine möglichst hohe rotatorische Steifigkeit um eine Drehachse einer dynamoelektrischen Maschine vorliegt, bei einer möglichst geringen translatorischen Steifigkeit, die auf den Stator der dynamoelektrischen Maschine bei Verschiebungen wirken.

Die Lösung der gestellten Aufgabe gelingt durch eine dynamoelektrische Maschine, die in oder an einer Arbeitsmaschine montierbar ist, mit einem Stator, der ein Wicklungssystem aufweist, und einem Rotor, wobei das Wicklungssystem mit dem Rotor elektromagnetisch wechselwirkt und somit eine Rotation des Rotors um eine Achse bewirkt, wobei an der Stirnseite der dynamoelektrischen Maschine ein Metallbalg als Drehmomentstütze vorgesehen ist.

Die Lösung der gestellten Aufgabe gelingt auch durch eine Antriebseinheit mit einer Arbeitsmaschine und einer dynamoelektrischen Maschine, die in oder an einer Arbeitsmaschine montierbar ist, mit einem Stator, der ein Wicklungssystem aufweist, und einem Rotor, wobei das Wicklungssystem mit dem Rotor elektromagnetisch wechselwirkt und somit eine Rotation des Rotors um eine Achse bewirkt, wobei an der Stirnseite der dynamoelektrischen Maschine ein Metallbalg als Drehmomentstütze vorgesehen ist, wobei sich die dynamoelektrische Maschine über den Metallbalg an der Arbeitsmaschine abstützt.

Der Metallbalg, der an der Stirnseite der dynamoelektrischen Maschine, in vorteilhafter Weise am Lagerschild des Stators, am Gehäuse der dynamoelektrischen Maschine oder am Stator selbst angebracht ist, bietet konstruktionsbedingt eine vergleichsweise hohe translatorische Flexibilität in Kombination mit vergleichsweise hoher Torsionssteifigkeit. Wird nun der Durchmesser des Metallbalgs auf den Außendurchmessers des Stators vergrößert, wirkt sich dies zusätzlich vorteilhaft auf das Verhältnis Translations-/Rotationssteifigkeit aus, da der Radius des angeordneten Materials quadratisch in das Widerstandsmoment gegen Torsion einfließt.

Im Vergleich zu einer Wellenkupplung, ist also bei gleicher Torsionsteifigkeit eine wesentlich höhere Flexibilität bei Verschiebung oder alternativ dazu eine höhere Torsionssteifigkeit bei gleicher Flexibilität am Außendurchmesser des Stators möglich.

Als Direktantrieb werden in vorteilhafter Weise Torquemotoren eingesetzt, die als getriebeloser Direktantrieb mit sehr hohen Drehmomenten bei vergleichsweise geringen Drehzahlen aufwarten. Als Torquemotor wird vereinfacht ein auf hohe Drehmomente optimierter großer Servomotor mit Hohlwelle angesehen. Torquemotoren werden für schnelle und genaue Verfahren für Positionieraufgaben eingesetzt. Als Torquemotoren werden dabei permanenterregte Synchronmotoren, geschaltete Reluktanzmotoren oder auch Asynchronmotoren vorgesehen.

Die Erfindung ist selbstverständlich auch bei Getriebemotoren einsetzbar. Dabei ist eine dynamoelektrische Maschine mit einem Getriebe in kompakter Bauart in einem Gehäuse angeordnet. Bei einem Getriebemotor ist die Antriebswelle des Motors über das Getriebe mit der Welle der Arbeitsmaschine verbunden. Der Metallbalg ist dabei erfindungsgemäß zwischen Gehäuse des Getriebemotors und Arbeitsmaschine angeordnet.

In vorteilhafter Weise wird der Metallbalg an einer Stirnseite der dynamoelektrischen Maschine angebracht und mit seinem auf der anderen Seite des Metallbalgs befindlichen, in vorteilhafter Weise radial abstehenden Flansch in oder an der Arbeitsmaschine befestigt. Damit wird nun in effektiver Weise in den drei Raumachsen eine hohe Torsionssteifigkeit bei hoher translatorischer Flexibilität erreicht. Dies ist insbesondere dann vorteilhaft, wenn für den Torquemotor nur ein äußerst begrenzter Einbauraum zur Verfügung steht. Damit ist das Gesamtkonzept platzsparender Torquemotors plus platzsparende Drehmomentstütze in einer Antriebseinheit äußerst vorteilhaft.

In einer Ausführungsform weist die dynamoelektrische Maschine ein Gehäuse auf, wobei sich der Metallbalg somit über das Gehäuse abstützt, das mit dem Stator drehfest verbunden ist. Damit kann der Stator von einem Gehäuse umgeben sein, das beispielsweise eine Flüssigkeitskühlung aufweist und somit zur Motorkühlung beiträgt. Die Drehmomentenstütze wirkt dabei nicht direkt auf den Stator sondern indirekt über das Gehäuse auf den im Gehäuse der dynamoelektrischen Maschine drehfest verbundenen Stator.

In einer alternativen Ausführungsform weist der Stator ein Lagerschild auf, an dem sich der Metallbalg direkt abstützt, dies hat den Vorteil, dass nunmehr diese Drehmomentstütze auch bei gehäuselosen Direktantrieben eingesetzt werden kann.

Erfindungsgemäß sind Arbeitsmaschine, Metallbalg und dynamoelektrische Maschine bzw. Getriebemotor axial hintereinander angeordnet. In einer alternativen Ausführungsform ist die dynamoelektrische Maschine bzw. der Getriebemotor innerhalb der Arbeitsmaschine angeordnet und dort mit dem Metallbalg verbunden.

Dabei erstreckt sich der Metallbalg entweder in axialer Richtung oder in radialer Richtung, wobei dabei dann der Metallbalg als gewellte Scheibe ausgeführt ist, deren Wellen konzentrisch um eine Antriebsachse verlaufen.

Die vorliegende Erfindung sowie weitere vorteilhafte Ausgestaltungen der Erfindung werden anhand der beifügten prinzipiellen Darstellungen näher erläutert, dabei zeigen:
- FIG 1: einen Metallbalg,
- FIG 2: eine perspektivische Darstellung eines Direktan-triebs mit Metallbalg,
- FIG 3: eine perspektivische Darstellung eines Direktan-triebs mit Metallbalg und Arbeitsmaschine in Explo-sionsdarstellung,
- FIG 4: einen prinzipiellen Längsschnitt eines Torquemotors mit Metallbalg und daran gekoppelter Arbeitsmaschi-ne,
- FIG 5-7: Anordnungen des Metallbalgs an der dynamoelektri-schen Maschine,
- FIG 8-10: Anordnungen der Flansche am Metallbalg.

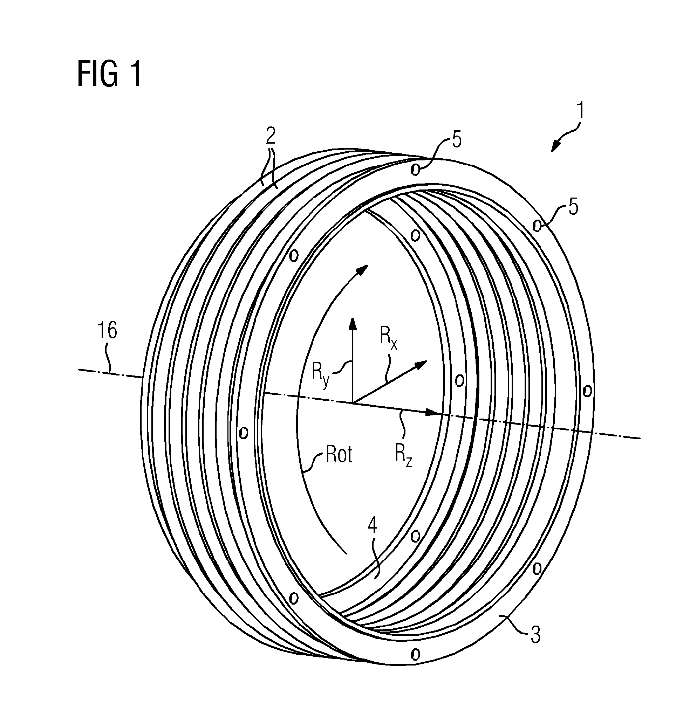

FIG 1 zeigt in perspektivischer Darstellung einen Metallbalg 1, der an seinen axialen Stirnseiten jeweils einen Flansch aufweist. Dabei ist gemäß dieser Ausführung auf der einen Seite ein Flansch 3 vorgesehen, der sich radial nach außen über den Außendurchmesser des Metallbalgs 1 erstreckt. Damit ist der Durchmesser dieses Flansches 3 größer als der Durchmesser des Metallbalgs 1. Auf der gegenüberliegenden Stirnseite des Metallbalgs 1 ist ein Flansch 4 vorgesehen, der sich radial nach innen erstreckt.

Der Metallbalg 1 weist eine zylindrische Grundform auf, wobei die Mantelfläche des Zylinders zumindest eine umlaufende Wölbung nach innen oder außen aufweist. Diese Wölbung wird als Balg 2 bezeichnet.

Der Metallbalg 2 setzt sich in axialer Richtung, also in Richtung Raumachse Rz aus mehreren Wölbungen bzw. Balge 2 zusammen. Dabei sind identische Balge 2 oder auch Balge vorstellbar, deren Wölbung abwechselnd nach innen und außen gekehrt sind.

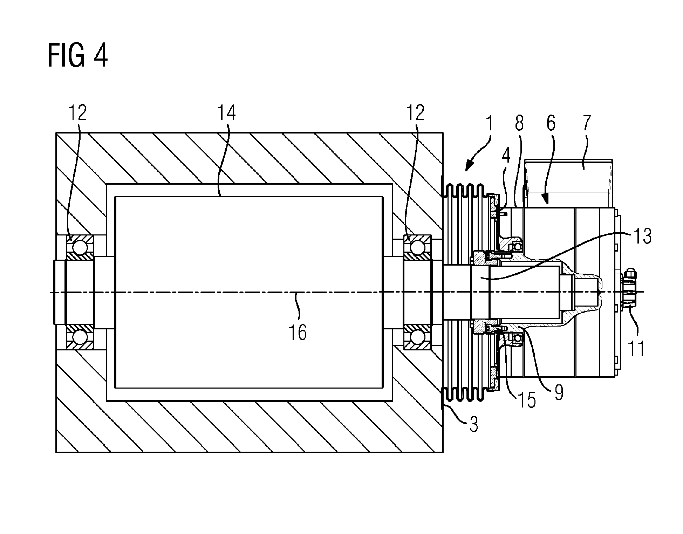

In einem Längsschnitt betrachtet ergibt sich somit zwischen den beiden Flanschen 3,4 an den Stirnseiten der zylindrischen Grundform, ein mehr oder weniger wellenförmiger Verlauf der Mantelfläche (siehe auch FIG 4).

Dieser Metallbalg 1, der auch als Wellrohr bezeichnet wird, ist als Verbindungselement ausgeführt, das eine drehstarrejedoch auch achs- und winkelversetzte Verbindung zwischen zwei Gegenständen ermöglicht. Der erfindungsgemäße Metallbalg 1 weist aufgrund seiner Konstruktion eine vergleichsweise hohe translatorische Flexibilität in Richtung der einzelnen Raumachsen Rx, Ry, Rz auf, bei einer vergleichsweise hohen Torsionssteifigkeit, d.h. einer Übertragung von hohen Drehmomenten in Richtung des Pfeiles "Rof".

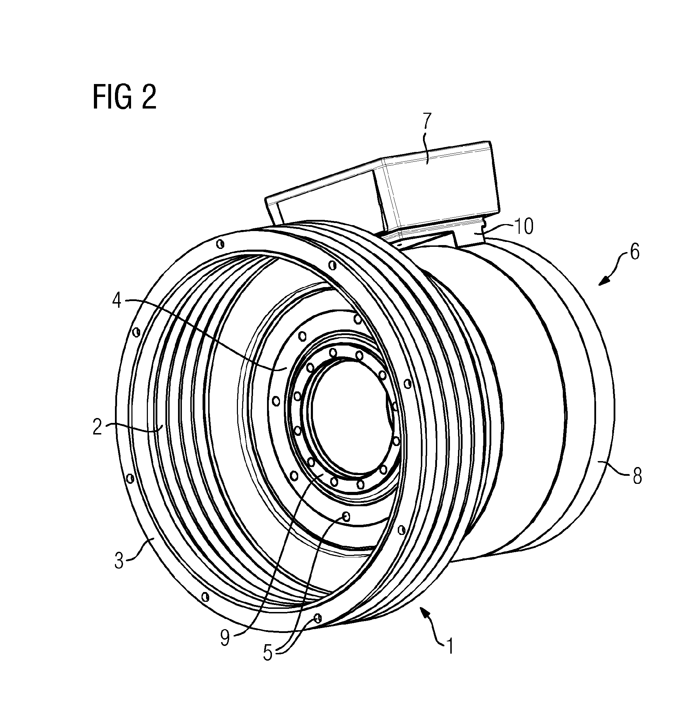

In vorteilhafter Weise ist nunmehr gemäß FIG 2 der Außendurchmesser des Metallbalgs 1 größer als der Durchmesser eines Gehäuses 8 einer dynamoelektrischen Maschine 6, die als Direktantrieb bzw. Torquemotor ausgeführt ist. Der Metallbalg 1 wird dabei durch seinen Flansch 4 am Gehäuse 8 oder einem Stator 17 über die Befestigungsstellen 5 beispielsweise mittels Schrauben verbunden.

Alternativ dazu kann der Flansch 4 auch an einem nicht näher dargestellten Lagerschild der dynamoelektrischen Maschine 6 angebracht sein. Die dynamoelektrische Maschine 6, in diesem Fall als Torquemotor ausgeführt, weist einen Klemmkasten 7 auf, der über eine Haltevorrichtung 10 vom Gehäuse 8 beabstandet ist, so dass eine Luftkühlung über den gesamten Umfang des Gehäuses 8 möglich ist. Gleichzeitig wird dadurch eine Kühlung ev. im Klemmkasten 7 befindlicher elektronischer Bauteile gewährleistet.

Die dynamoelektrische Maschine 6, insbesondere der Torquemotor, weist ein Wicklungssystem auf, das in Nuten eines Blechpaketes des Stators 17 oder als Luftspaltwicklung ausgeführt ist. Der Rotor weist eine Welle auf, an deren Umfang beispielsweise Permanentmagnete in axial verlaufenden Taschen oder an der Oberfläche angeordnet sind und im Betrieb der dynamoelektrischen Maschine 6 mit dem Wicklungssystem des Stators 17 wechselwirken, so dass sich eine Rotation des Rotors um eine Achse 16 einstellt. Dies stellt einen permanenterregten Synchronmotor dar.

Der Rotor kann selbst auch als Kurzschlussläufer ausgeführt sein und so eine Asynchronmaschine bilden.

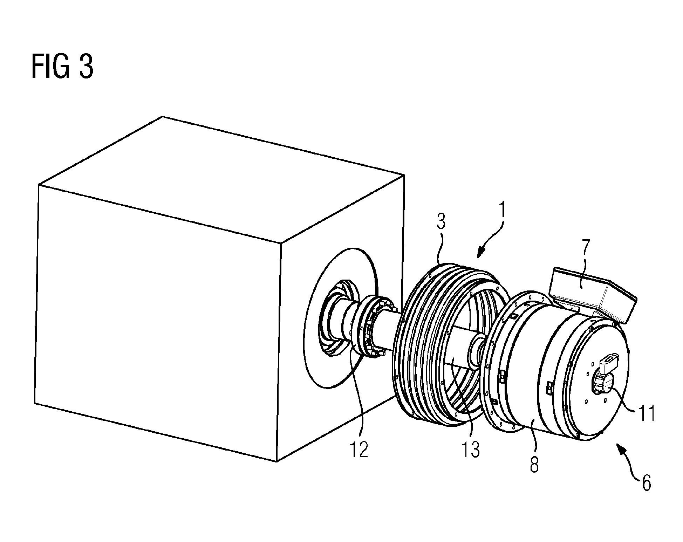

FIG 3 zeigt in einer Explosionsdarstellung eine dynamoelektrische Maschine 6, die als Torquemotor ausgeführt ist, axial daran anschließend die als Metallbalg 1 ausgebildete Drehmomentstütze und an deren axialen Anschluss eine Arbeitsmaschine 14, die ein Lager 12 und einen Wellenzapfen 13 aufweist. Der Wellenzapfen 13 ragt in eine Hohlwelle oder eine Aufsteckwelle 9 des Rotors und wird dort wie in FIG 4 beispielhaft dargestellt, drehfest mit der Aufsteckwelle 9 verbunden.

Grundsätzlich ist die Erfindung bei folgenden Kopplungen der Wellen von Antriebsmotor (Direktantrieb oder über Getriebe) und Arbeitsmaschine einsetzbar. Arbeitsmaschine 14 und Antriebsmotor weisen jeweils eine Vollwelle auf, die durch eine starre Hülse miteinander drehfest verbunden sind. Arbeitsmaschine 14 oder Antriebsmotor weisen eine Aufsteckwelle 9 auf, in die eine Vollwelle von Arbeitsmaschine 14 oder Antriebsmotor ragt und dort drehfest verbunden ist.

Ebenso kann Arbeitsmaschine 14 oder Antriebsmotor eine Hohlwelle aufweisen, in die eine Vollwelle der Arbeitsmaschine 14 oder des Antriebsmotor ragt und dort drehfest verbunden ist.

FIG 4 zeigt in einen prinzipiellen Längsschnitt die zusammengebaute Antriebseinrichtung mit einem Torquemotor, einem Metallbalg 1 und einer Arbeitsmaschine 14 mit ihren Lagern 12. Die dem Torquemotor zugewandte Seite der Arbeitsmaschine 14 weist einen Wellenzapfen 13 auf, der in die Aufsteckwelle 9 des Rotors ragt und dort drehfest, beispielsweise mittels einer Klemmvorrichtung 15 fixiert ist. Des Weiteren ist an der der Arbeitsmaschine 14 abgewandten Seite des Torquemotors eine Gebervorrichtung 11 vorgesehen, die mit einer Regelung der dynamoelektrischen Maschine 6, vorzugsweise im Klemmkasten 7 verbunden ist.

Der Metallbalg 1 ist über einen Flansch 3 am Gehäuse der Arbeitsmaschine 14 befestigt und über einen weiteren Flansch 4 am Gehäuse 8 des Torquemotors 6 angebracht.

Der Torquemotor 6 ruht auf dem Wellenzapfen 13 der Arbeitsmaschine 14. Das Gewicht trägt die vergleichsweise massiv ausgeführte Lagerung 12 der Arbeitsmaschine 14. Dies wird auch als shaft-mounted, also als auf der Welle reitend bezeichnet. Der Metallbalg 1 verbindet nunmehr den motorgehäuseseitigen Flansch 4 über den Metallbalg 1 mit dem Gehäuse bzw. der Maschinenstuhlung der Arbeitsmaschine 14. Um die Montierbarkeit dieses Metallbalgs zu gewährleisten, wird der Flansch 4 auf der Motorseite mit einem Zwischenring versehen und der Metallbalg 1 aus Richtung Arbeitsmaschine 14 aufgeschoben. Der Metallbalg 1 hat nun im Verhältnis zu seiner rotatorischen Steifigkeit in den drei translatorischen Achsen Rx,Ry,Rz eine geringe Steifigkeit, was vor allem die Belastung des Motorlagers reduziert. Ein nicht ideal fluchtender Anbau einer Kundenwelle zur Achse 16 führt immer zu zusätzlichen Lagerkräften. Da aber nun die Steifigkeit in den translatorischen Raumachsen äußerst gering ist, sind auch die dazu korrespondierenden Rückstellkräfte wesentlich geringer, da nunmehr der Stator 17 bzw. das Gehäuse 8 oder das Lagerschild 18 sich durch nachgeben des Metallbalgs 1 verschieben kann.

Der Metallbalg 1 ist nunmehr sowohl auf der Motorseite als auch auf der Seite der Arbeitsmaschine 14 spielfrei angebracht. Dies wird dadurch erreicht, dass der Metallbalg 1 über seine Befestigungsstellen 5 über die jeweiligen Flansche 3,4 mit dem jeweiligen Gehäuse kraftschlüssig verschraubt oder stoffflüssig verklebt, verschweißt oder gebördelt ist.

Diese als Metallbalg 1 ausgebildete Drehmomentstütze hat nun Verschleißfreiheit im Vergleich zu einem flexiblen Element auf Polymerbasis oder einem spielbehafteten Element. Dies führt zu einer vergleichsweise hohen und gleichbleibenden Regelgüte der zu regelnden Antriebseinheit, so dass keine Totzeit in der Regelstrecke "Antrieb-Arbeitsmaschine" bzw. "Torquemotor-Arbeitsmaschine" auftritt. Im Vergleich zu einer Wellenkupplung ergibt sich eine größere Steifigkeit durch Anbringen des Metallbalgs 1 auf einen vergleichsweise großen Durchmesser bei gleicher Rückstellkraft. Damit lässt sich eine durch die Anbindung bedingte Resonanzstelle der Regelstrecke in unkritische Frequenzbereiche der Antriebseinheit anheben.

Im Umkehrschluss stellt sich nun bei gleicher Steifigkeit wie bei einer Wellenkupplung eine Reduktion der Lagerbelastung ein.

Durch die theoretisch unendlich vielen Ebenen symmetrischer Kreisringe des Metallbalgs 1 erfolgt bei Veränderungen der Drehmomentbelastung im Vergleich zu einer einarmigen Drehmomentstütze keine Veränderung der Rückstellkraft. Dies führt zu einer stabilen Regelung der Antriebseinheit, da ausschließlich reine Torsionsschwingungen zu Resonanzen in der Regelstrecke führen.

Da die Torsionsfederelemente Welle und Drehmomentenstütze mit ihren Steifigkeiten und damit ihren verbundenen Eigenfrequenzen bekannt sind, sind diese einfach zu beherrschen, d.h. sie können dementsprechend einfach ausgefiltert werden.

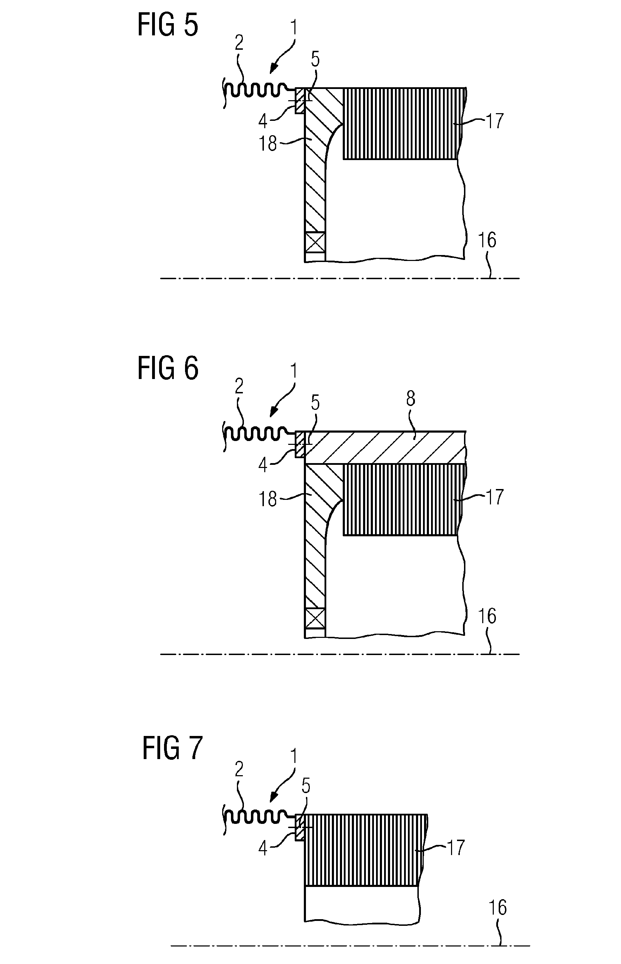

FIG 5 bis 7 zeigen weitere Möglichkeiten der Anbindung des Metallbalgs 1 an der Seite der dynamoelektrischen Maschine 6.

FIG 5 zeigt einen Ausschnitt einer gehäuselosen dynamoelektrischen Maschine, insbesondere des Stators 17, und einem in Richtung der Arbeitsmaschine 14 angeordneten Lagerschild 18. Lagerschild 18 und Stator 17 sind drehfest miteinander verbunden. Der Metallbalg 1 ist über einen Flansch 4 an dem Lagerschild 18, vorzugsweise durch Schrauben an den Befestigungsstellen 5 angebracht.

FIG 6 zeigt die Anbringung des Metallbalgs an dem Gehäuse 8 der dynamoelektrischen Maschine 6. Das Gehäuse ist mit dem Stator 17 drehfest verbunden. Der Metallbalg 1 ist über einen Flansch 4 an dem Gehäuse 8, vorzugsweise durch Schrauben an den Befestigungsstellen 5 angebracht.

FIG 7 zeigt die Anbringung des Metallbalgs 1 direkt an dem Stator 17 einer gehäuselosen dynamoelektrischen Maschine 6.

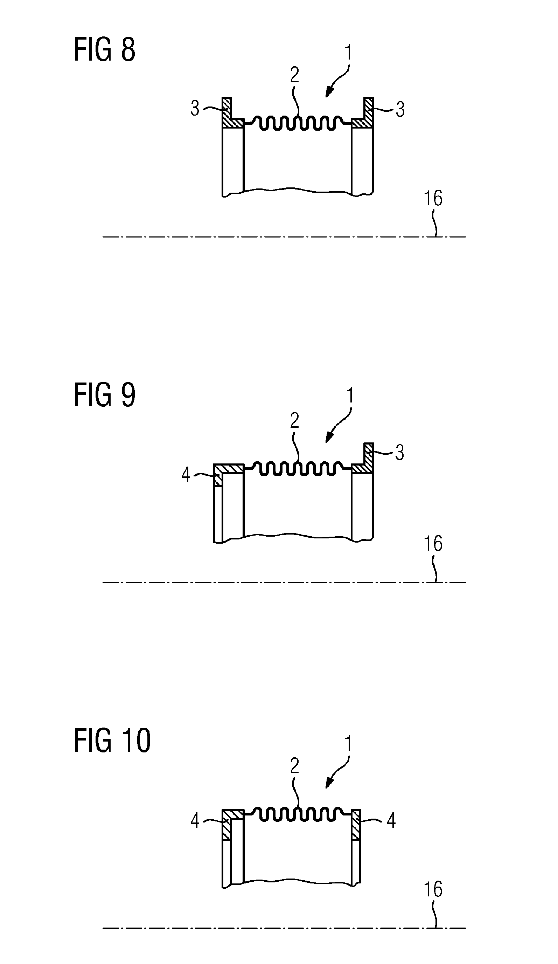

FIG 8 bis 10 zeigt Ausführungen des Metallbalgs 1, insbesondere der Flansche an den Stirnseiten des Metallbalgs 1. Die Flasche mit ihren Befestigungsstellen ist dabei nach innen in Richtung der Achse 16 oder nach außen gerichtet. Die jeweilige Ausführung richtet sich unter anderem nach den örtlichen Gegebenheiten, dabei soll eine einfache Montage des Metallbalgs 1 zwischen Arbeitsmaschine 14 und dynamoelektrischer Maschine bzw. Getriebemotor gewährleistet sein.

## Patentansprüche

1. Dynamoelektrische Maschine (6), die in oder an eine Arbeitsmaschine (14) montierbar ist, mit einem Stator (17), der ein Wicklungssystem aufweist, und einem Rotor, wobei das Wicklungssystem mit dem Rotor elektromagnetisch wechselwirkt und somit eine Rotation des Rotors um eine Achse (16) bewirkt, wobei an der Stirnseite der dynamoelektrischen Maschine (6) ein Metallbalg (1) als Drehmomentstütze vorgesehen ist.

2. Dynamoelektrische Maschine (6) nach Anspruch 1, **dadurch gekennzeichnet , dass** das Wicklungssystem des Stators (17) in Nuten eines Blechpaketes des Stators oder als Luftspaltwicklung ausgeführt ist.

3. Dynamoelektrische Maschine (6) nach Anspruch 1 oder 2,
**dadurch gekennzeichnet , dass** der Rotor eine Hohlwelle, Aufsteckwelle oder Vollwelle aufweist.

4. Dynamoelektrische Maschine (6) nach einem der vorhergehenden Ansprüche, **dadurch gekennzeichnet , dass** der Rotor Permanentmagnete aufweist, die in axial verlaufenden Taschen oder an der Oberfläche des Rotors angeordnet sind oder dass der Rotor als Kurzschlussläufer ausgebildet ist.

5. Dynamoelektrische Maschine (6) nach einem der vorhergehenden Ansprüche,
**dadurch gekennzeichnet ,**
**dass** der Metallbalg (1) an seinem einen axialen Ende an einem Gehäuse (8) der dynamoelektrischen Maschine (6), an dem Blechpaket des Stators (17) oder an einem Lagerschild (18) der dynamoelektrischen Maschine (6) angebracht ist.

6. Dynamoelektrische Maschine (6) nach einem der vorhergehenden Ansprüche,
**dadurch gekennzeichnet ,**
**dass** der Metallbalg (1) an seinen axialen Enden, also seinen Stirnseiten Flansche (3,4) aufweist, die zum Einen radial nach außen und/oder zum Anderen radial nach innen weisen.

7. Dynamoelektrische Maschine (6) nach einem der vorhergehenden Ansprüche,
**dadurch gekennzeichnet,**
**dass** der Durchmesser des Metallbalgs (1) dem Außendurchmesser des Stators (17) entspricht.

8. Antriebseinheit mit einer Arbeitsmaschine (14) und einer dynamoelektrischen Maschine (6) nach einem der oben genannten Ansprüche, wobei sich die dynamoelektrische Maschine (6) über den Metallbalg (1) an der Arbeitsmaschine (14) abstützt.

9. Antriebseinheit nach Anspruch 8, **dadurch gekennzeichnet , dass** Arbeitsmaschine (14), Metallbalg (1) und dynamoelektrische Maschine (6) insbesondere axial hintereinander angeordnet sind.

10. Antriebseinheit nach Anspruch 8 oder 9,
**dadurch gekennzeichnet , dass** ein Wellenzapfen (13) der Arbeitsmaschine (14) in die Hohlwelle oder Aufsteckwelle (9) der dynamoelektrischen Maschine (6) ragt und dort drehfest mit dem Rotor verbunden ist.
